(19) Europäisches Patentamt / European Patent Office / Office européen des brevets

(11) **EP 3 046 215 B1**

(12) **EUROPEAN PATENT SPECIFICATION**

(45) Date of publication and mention
of the grant of the patent:
**21.08.2019  Bulletin 2019/34**

(51) Int Cl.:
*H02J 9/06* (2006.01)          *H02J 7/04* (2006.01)

(21) Application number: **15151245.6**

(22) Date of filing: **15.01.2015**

(54) **An uninterruptible power supply device for outdoor medium voltage electric installations.**

Vorrichtung zur unterbrechungsfreien Stromversorgung für elektrische Mittelspannungsinstallationen im Außenbereich

Dispositif d'alimentation électrique sans coupure à l'extérieur pour installations électriques moyenne tension

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.07.2016  Bulletin 2016/29**

(73) Proprietor: **ABB Schweiz AG**
**5400 Baden (CH)**

(72) Inventors:
• **De Natale, Gabriele Valentino**
**I-20126 Milano (IT)**
• **Di Maio, Luciano**
**I-20162 Milano (IT)**
• **Testa, Marco**
**I-24044 Dalmine (BG) (IT)**
• **Ricci, Andrea**
**I-24044 Dalmine (BG) (IT)**

(74) Representative: **De Bortoli, Eros et al**
**Zanoli & Giavarini S.p.A.**
**Via Melchiorre Gioia, 64**
**20125 Milano (IT)**

(56) References cited:
CN-A- 103 490 481          JP-A- 2000 116 029
US-A1- 2005 068 002        US-A1- 2011 133 560
US-B1- 6 225 708           US-B2- 7 816 812

## Description

The present invention relates to an uninterruptible power supply (UPS) device for medium voltage electric installations.

For the purposes of the present invention, the term medium voltage (MV) identifies voltages higher than 1 kV AC and 1.5 kV DC up to tens of kV, e.g. up to 72 kV AC and 100 kV DC.

The power supply device of the invention is particularly suitable for use in outdoor MV electric installations, for example in outdoor MV switching apparatuses, such as reclosers, circuit breakers, contactors, disconnectors, or the like.

As is known, an outdoor MV electric installation often comprises an UPS device to provide electric power to suitable components and devices of said electric installation. For example, in an outdoor MV switching apparatus, an UPS device is typically arranged to feed the devices included in the control cabinet.

As is known, the electric loads fed by the UPS device, as a whole, generally require a remarkable amount of electric power that needs to be harvested from a power supply and/or from batteries.

Commonly adopted UPS devices generally show relevant drawbacks in terms of cost, size and electric power dissipation.

Traditional UPS devices further show drawbacks in terms of flexibility and versatility of use.

As an example, they often show poor performances in managing temporary overload conditions exceeding the power ratings of the voltage converters, e.g. due to electric power peak requests by the electric loads connected thereto.

US2005/0068002 A1 and US 7,816,812 B2 are disclosing UPS devices with a combination off fuel cells and secondary batteries to improve the output capabilities.

It is an object of the present invention to provide an UPS device for MV applications that solves the above-mentioned problems.

More particularly, it is an object of the present invention to provide an UPS device that is capable of providing high performances in managing the feeding of the electric loads connected thereto.

Still another object of the present invention is to provide an UPS device that is capable of providing high performances in managing temporary emergency conditions.

Another object of the present invention is to provide an UPS device that has a relatively low size and electric power dissipation.

Another object of the present invention is to provide an UPS device that can be easily manufactured at industrial level, at competitive costs.

The present invention provides an UPS device for MV electric installations according to the independent claim 1 and the related dependent claims.

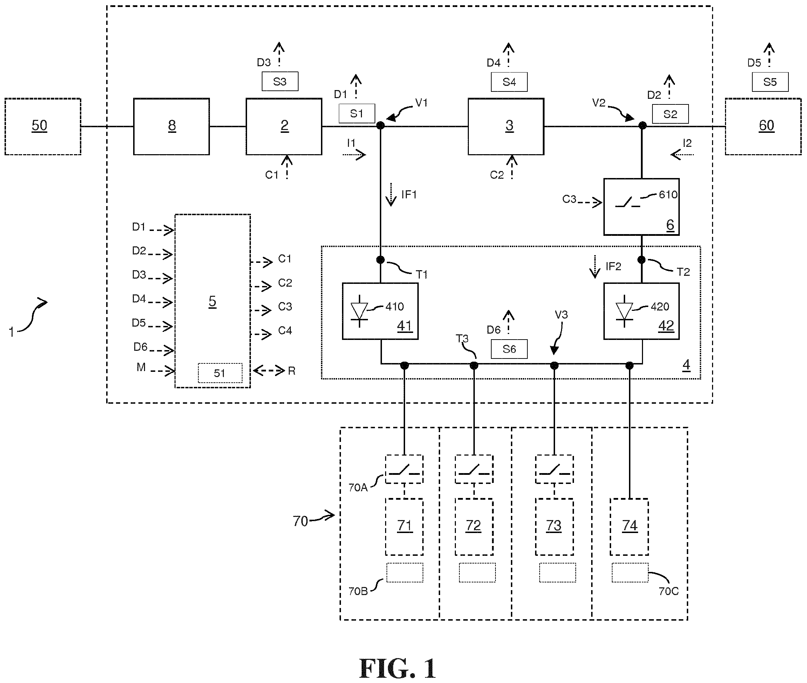

Further characteristics and advantages of the invention will emerge from the description of preferred, but not exclusive, embodiments of the power and control unit for medium voltage applications according to the invention, non-limiting examples of which are provided in the attached drawings, wherein figures 1-2 are block schemes of possible embodiments of the UPS device, according to invention.

Referring to the cited figures, the present invention relates to an UPS device 1 for MV electric installations, such as, for example, MV switching apparatuses, switchboards, motors and the like.

The UPS device 1 is electrically coupleable with one or more electric loads 70.

The electric loads 70 may be of various types depending on the MV electric installation, in which the UPS device is arranged.

As an example, in an outdoor MV switching device, the electric loads 70 may comprise, for example, a protection relay 71, a radio transmitter device 72, a capacitor bank charger 73 and a power and control device 74 for driving the actuator of the switching device.

One or more electric loads 70 are operatively associated with one or more sensors 70B (more generally, load sensing means) configured to detect electrical quantities related to the operative status of said loads, for example the feeding currents circulating in said loads. Preferably, one or more electric loads 70 are capable to communicate with the UPS device 1. One or more electric loads 70 are operatively associated with corresponding switches 70A configured to electrically connect or disconnect said loads with or from the UPS device 1. One or more electric loads 70 may be provided with corresponding control devices 70C (more generally, load control means) comprising, for example, suitable digital signal processing devices, such as microprocessors.

Preferably, the switches 70A, the sensors 70B and/or the control devices 70C are configured to communicate with control means 5 of the UPS device 1 and cooperate to manage the feeding of the corresponding loads.

In order to receive electric power to feed the electric loads 70, the UPS device 1 is electrically coupleable with a power supply 50.

As an example, in a MV switching apparatus, the power supply 50 is an auxiliary power supply unit capable of deriving electric power from a main AC electric power line.

As it will be more evident in the following, the UPS device 1 is advantageously configured to derive the electric power to feed the electric loads 70 from the power supply 50 in normal operative conditions, e.g. when fault or overload conditions are not present.

In order to ensure an uninterruptible feeding of the electric loads 70, the UPS device 1 is electrically coupleable with one or more batteries 60, which may be of known type.

As shown in figure 1, one or more sensors 70A and one more switches 70B may be included in the loads 70, e.g. integrated in suitable protection circuits.

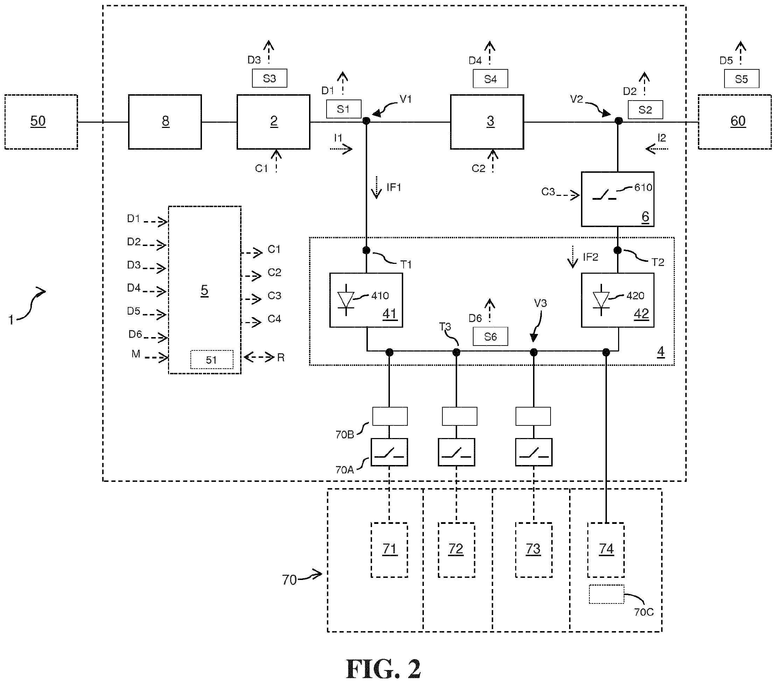

Alternatively, as shown in figure 2, one or more sensors 70A and one more switches 70B may be included in the UPS device 1, e.g. integrated in suitable protection circuits.

Other solutions are possible depending on the operative needs of the electric installation on which the UPS device is embedded.

As shown in figure 1, the batteries 60 are accommodated separately with respect to the UPS device 1 and are electrically connected to the UPS device 1 during installation.

However, in some embodiments of the invention, the batteries 60 may be integrated with the UPS device 1.

As it will be more evident in the following, the UPS device 1 is advantageously configured to charge the batteries 60 in normal operative conditions and feed the electrical loads 70 by means of the batteries 60 in particular operative conditions, e.g. when overload conditions are present.

The UPS device 1 comprises a conversion stage 2, which is electrically coupleable with the power supply 50.

The conversion stage 2 is adapted to receive electric power from the power supply 50 and provide a first output voltage V1 and a first output current I1,

In particular, the conversion stage 2 is adapted to receive a given input voltage made available by the power supply 50 and provide an adjustable output voltage V1.

Preferably, the conversion stage 2 comprises one or more control terminals (not shown), at which it receives control signals C1,

Preferably, the conversion stage 2 comprises an isolated DC/DC voltage converter.

Such a DC/DC converter may have a circuit configuration of known type. For example, it may be a flyback converter.

Preferably, the UPS device 1 comprises a rectification stage 8 electrically coupled to the conversion stage 2 in an upstream position with respect to the normal flow of electric power from the power supply 50 to the UPS device 1.

The rectification stage 8 is adapted to rectify an AC voltage made available by the power supply 50.

To this aim, the rectification stage 8 may comprise a plurality of diodes in a bridge-like configuration of known type.

The UPS device 1 comprises a charging stage 3, which is electrically coupled with the conversion stage 2 and is electrically coupleable with the batteries 60.

Advantageously, in operation, input terminals of the charging stage 3 are electrically connected with output terminals of the conversion stage 2 while output terminals of the charging stage 3 are electrically connected with corresponding terminals of the batteries 60.

The charging stage 3 is adapted to receive electric power from the conversion stage 2 and provide a charging current to the batteries 60.

The charging stage 3 may be of known type.

Preferably, the charging stage 3 comprises one or more control terminals (not shown), at which it receives control signals C2.

The UPS device 1 comprises a switching stage 4, which has a first input terminal T1 electrically coupled with the conversion stage 2, a second input terminal T2 electrically coupled with the batteries 60 and a third output terminal T3 electrically coupled with the electric loads 70.

Preferably, in operation, the input terminal T1 is electrically connected with the output terminals of the conversion stage 2, so that, in normal conditions, the input terminal T1 is substantially at the voltage V1 provided by the conversion stage 2.

Preferably, in operation, the input terminal T2 is electrically connected with the terminals of the batteries 60, so that, in normal conditions, the input terminal T2 is substantially at the voltage V2 provided by the batteries 60.

Advantageously, the output terminal T3 forms an output of the UPS device 1, at which the electric loads 70 are electrically coupleable with this latter to receive a feeding voltage V3. The switching stage 4 comprises a first diode circuit 41 electrically connected between with the input terminal T1 and the output terminal T3.

The diode circuit 41 is configured to allow the flow of a current from the conversion stage 2 to the electric loads 70, when the voltage V1 at the first input terminal T1 is higher than the feeding voltage V3 at the third output terminal T3.

Preferably, the diode circuit 41 comprises at least one diode 410 having the anode terminal electrically connected with the terminal T1 and the cathode terminal electrically connected with the terminal T3.

The switching stage 4 comprises a second diode circuit 42, which is electrically connected between with the input terminal T2 and the output terminal T3.

The diode circuit 42 is configured to allow the flow of a current from the batteries 60 to the electric loads 70, when the voltage V2 at the second input terminal T2 is higher than the voltage V3 at the third output terminal T3.

Preferably, the diode circuit 42 comprises at least one diode 420 having the anode terminal electrically connected with the terminal T2 and the cathode terminal electrically connected with the terminal T3.

The switching stage 4 is advantageously configured so that the operation of the first and second diode circuits 41, 42 can be controlled by adjusting the first output voltage V1 as a function of the second output voltage V2.

In other words, the switching stage 4 is configured so that the first diode circuit 41 and the second diode circuit 42 respectively allow or prevent the flow of corresponding feeding currents IF1, IF2 towards the electric loads 70 depending on the mutual relationship between the first output voltage V1 and the second output voltage V2.

Advantageously, the output voltages V1, V2 are selected sufficiently higher than a minimum feeding voltage $V3_{MIN}$ (e.g. 20V), so as to always feed the electric loads 70 and bring the diodes 410, 420 in a conduction state.

In other words, the output voltages V1, V2 are selected so that the following conditions are always present:

$$V1>V3_{MIN}+VTH1$$

$$V2>V3_{MIN}+VTH2$$

where VTH1, VTH2 are respectively the threshold voltages of the diodes 410, 420 and $V3_{MIN}$ is a minimum feeding voltage to feed the electric loads 70.

In a first case, the output voltage V1 may be adjusted so that the following conditions are obtained:

$$V1>V3_{MIN}+VTH1$$

$$V1>V2+VTH2.$$

In this case, the first diode circuit 41 allows the flow of a first feeding current IF1 from the conversion stage 2 to the electric loads 70, as the output voltage V1 is sufficiently high to bring the corresponding diode 410 in a conduction state.

In this situation, the voltage V3 at the terminal T3 is V3≈V1.

As the output voltage V1 is higher than the output voltage V2, the diode circuit 42 prevents the flow of a second feeding current IF2 from the batteries 60 to the electric loads 70, as the corresponding diode 420 is immediately brought in an interdiction state (after an initial conduction period).

In a second case, the output voltage V1 may be adjusted so that the following conditions are obtained:

$$V1>V3_{MIN}+VTH1$$

$$V1<V2-VTH1.$$

In this case, the diode circuit 42 allows the flow of a feeding current IF2 from the batteries 60 to the electric loads 70, as the output voltage V2 is sufficiently high to bring the corresponding diode 420 in a conduction state.

In this situation, the voltage V3 at the terminal T3 is V3≈V2.

As the output voltage V2 is higher than the output voltage V1, the diode circuit 41 prevents the flow of a feeding current IF1 from the conversion stage 2 to the electric loads 70, as the corresponding diode 410 is immediately brought in an interdiction state (after an initial conduction period).

It is observed that, in this situation, the feeding of the electric loads 70 is always ensured, even in case of failure of the batteries 60 (due to a fault or because the batteries are not sufficiently charged), as the output voltage V1 is, in any case, sufficiently high to feed the electric loads 70 (V1>$V3_{MIN}$+VTH1).

The UPS device 1 comprises control means 5 to manage the operation of the UPS device itself.

For example, the control means 5 can manage internal and external diagnostic activities, provide/receive control signals, communicate with external or internal devices and perform other activities requested during the operating life of the UPS device 1.

In particular, the control means 5 are adapted to control the charging of the batteries 60 and the feeding of the electric loads 70.

To this aim, the control means 5 are adapted to generate control signals C1, C2 for driving the operation of the conversion stage 2 and of the charging stage 3.

According to an aspect of the invention, the control means 5 are adapted to manage the feeding of the electric loads 70 by adjusting the first output voltage V1 provided by the conversion stage 2 as a function of the second output voltage V2 provided by the batteries 60. By adjusting the output voltage V1 as a function of the output voltage V2, the control means 5 are in fact capable of controlling the operation of the diode circuits 41, 42, in particular alternatively activating or deactivating the diode circuits 41, 42 by alternatively bringing the corresponding diodes 410, 420 in a conduction or interdiction state.

In this way, the control means 5 are capable of alternatively feeding the electric loads 70 by means of a feeding current IF1 provided by the conversion stage 2 or by means of a feeding current IF2 provided by the batteries 60.

Preferably, the control means 5 are adapted to communicate with one or more loads 70. Preferably, the control means 5 are adapted to receive status signals M indicative of the operative status of the electric loads 70.

The status signals M may comprise sensing signals provided by the sensors 70A that are integrated or operatively associated with the loads 70.

As an example, the status signals M may comprise sensing signals indicative of the feeding currents provided by the UPS device 1 to the loads 70.

The status signals M may comprise control signals generated by the loads 70 or by the control devices 70C thereof.

As an example, when the UPS device 1 is comprised in a MV switching apparatus, the control means 5 may receive signals indicative of an incoming switching operation, which are sent by the power and control unit 74.

As a further example, in case of short-currents in one of the loads 70, the control means 5 may receive signals indicative of the presence of fault conditions, which are sent by the corresponding control device 70C integrated or operatively associated with said load.

The control means 5 are adapted to receive and process the status signals M, in particular to manage the charging of the batteries 60 and the feeding of the electric loads 70 on the base of the information provided by the status signals M.

Preferably, the control means 5 are adapted to send control signals C4 to control the operative status of the loads 70.

In particular, the control means 5 are preferably adapted to provide control signals C4 to control the connection or disconnection of said loads with or from the UPS device 1.

To this aim, the control means 5 are preferably adapted to send control signals C4 to one or more switches 70A to control the electrical connection or disconnection of the corresponding electric loads 70 with or from the UPS device 1.

Preferably, the control means 5 are adapted to control the electrical connection or disconnection of the electric loads 70 with or from the UPS device 1 on the base of load priority data.

Preferably, the control means 5 are adapted to control the electrical connection or disconnection of the electric loads 70 with or from the UPS device 1 on the base of the information provided by the status signals M, which are sent by the electric loads 70 themselves.

For example, when an electric power peak absorption conditions are signalled (status signals M) by one of the loads 70, the control means 5 may send control signals C4 to one or more switches 70A to temporary disconnect one or more corresponding further loads 70 from the UPS device 1.

Preferably, the control means 5 comprise one or more main digital processing devices (e.g. one or more microprocessors) that are configured to execute software instructions for operating the UPS device 1.

Preferably, the UPS device 1 comprises first sensing means S1 adapted to provide first sensing signals D1 indicative of the first output voltage V1 and the first output current I1 provided in output by the conversion stage 2.

The sensing means S1 may comprise one or more voltage and current sensors of known type. The control means 5 are adapted to receive and process the sensing signals D1.

More particularly, the control means 5 are adapted to manage the charging of the batteries 60 and the feeding of the electric loads 70 on the base of the information provided by the sensing signals D1.

Preferably, the UPS device 1 comprises second sensing means S2 adapted to provide second sensing signals D2 indicative of the second output voltage V2 and the second output current I2 provided by the batteries 60.

The sensing means S2 may comprise one or more voltage and current sensors of known type. The control means 5 are adapted to receive and process the sensing signals D2.

More particularly, the control means 5 are adapted to manage the charging of the batteries 60 and the feeding of the electric loads 70 on the base of the information provided by the sensing signals D2.

Preferably, the UPS device 1 comprises third sensing means S3 adapted to provide third sensing signals D3 indicative of the temperature of the conversion stage 2, for example of the internal temperature of the conversion stage or the temperature in the proximity of this latter. The sensing means S3 may comprise one or more temperature sensors of known type.

The control means 5 are adapted to receive and process the sensing signals D3.

More particularly, the control means 5 are adapted to manage the charging of the batteries 60 and the feeding of the electric loads 70 on the base of the information provided by the sensing signals D3.

Preferably, the UPS device 1 comprises fourth sensing means S4 adapted to provide fourth sensing signals D4 indicative of the temperature of the charging stage 3, for example of the internal temperature of the charging stage or the temperature in the proximity of this latter. The sensing means S4 may comprise one or more temperature sensors of known type.

The control means 5 are adapted to receive and process the sensing signals D4.

More particularly, the control means 5 are adapted to manage the charging of the batteries 60 and the feeding of the electric loads 70 on the base of the information provided by the sensing signals D4.

Preferably, the control means 5 are adapted to receive fifth sensing signals D5 indicative of the temperature of the batteries 60, for example of the internal temperature of the charging stage or the temperature in the proximity of this latter.

The sensing signals D5 are provided by sensing means S5, which may comprise one or more temperature sensors of known type.

The sensing means S5 may be comprised in the UPS device 1 or integrated with the batteries 60 (e.g. when these latter are not comprised in the UPS device 1).

The control means 5 are adapted to process the sensing signals D5.

More particularly, the control means 5 are adapted to manage the charging of the batteries 60 and the feeding of the electric loads 70 on the base of the information provided by the sensing signals D5.

The UPS device 1 may be further provided with additional sensing means for diagnostic purposes.

As an example, the UPS device 1 may comprise sixth sensing means S6 adapted to provide first sensing signals D6 indicative of the feeding voltage V3, which is provided in output by the UPS device 1 to the electric loads 70.

The sensing means S6 may comprise one or more voltage sensors of known type.

The control means 5 are adapted to receive and process the sensing signals D6 for diagnostic purposes and/or managing the charging of the batteries 60 and the feeding of the electric loads 70.

Preferably, the UPS device 1 comprises a disconnection stage 6, which is electrically coupled with the batteries 60 and the electric loads 70.

Preferably, the UPS device 1 comprises at least one switch 610 (e.g. a MOSFET) electrically connected in series with the batteries 60, the switching stage 4, in particular the diode circuit 42, and the electric loads 70.

Preferably, the disconnection stage 6 is electrically connected between the second input terminal T2 of the switching stage 4 and the terminals of the batteries 60.

The disconnection stage 6 is adapted to electrically connect or disconnect the batteries 60 with or from the electric loads 70.

In particular, the switch 610 of the disconnection stage 6 is advantageously configured so as to allow or prevent the flow of a current between the batteries 60 and the loads 70, upon receiving suitable control signals C3.

Preferably, the control means 5 are adapted to control the operation of the disconnection stage 6, e.g. by providing the control signals C3 to the switch 610.

In particular, the control means 5 are adapted to control the operation of the disconnection stage 6 on the base of the information provided by the fifth sensing signals D5 indicative of the temperature of the batteries 60.

The operation of the UPS device 1 are now described referring to some relevant operating conditions.

Preferably, in normal conditions, e.g. when overload conditions or fault conditions are not determined, the control means 5:

- provide control signals C1 to adjust the first output voltage V1 so that it is higher than the output voltage V2. In this case, the feeding of the electric load 70 is ensured by the conversion stage 2 only. In fact, the diode circuit 41 allows the flow of a feeding current IF1 from the conversion stage 2 to the electric loads 70 whereas the diode circuit 42 prevents the flow of a feeding current IF2 from the batteries 60 to the electric loads 70;
- provide control signals C2 to switch on the charging stage 3 and charge the batteries 60;
- provide control signals C3 to electrically connect the batteries 60 to the electric loads 70;
- provide control signals C4 to manage the electrical connection/disconnection of one or more loads 70 according to the needs.

Preferably, if the control means 5 determine over-heating or over-loading conditions for the conversion stage 2 on the base of the sensing signals D3 and D1, the control means 5 provide control signals C2 to the charging stage 3 in order to switch off said charging stage for a given period of time, reducing the overall load supplied by the conversion stage 2.

Preferably, if they determine over-heating conditions for the conversion stage 2 on the base of the sensing signals D3, the control means 5 provide control signals C1 to the conversion stage 2 in order to switch off said conversion stage for a given period of time.

In this case, the feeding of the electric load 70 is ensured by the batteries 60. In fact, the diode circuit 42 allows the flow of a feeding current IF2 from the batteries 60 to the electric loads 70, even if the output voltage V1 was initially set higher than the output voltage V2, as no currents flow along the first diode circuit 41 anymore and the output voltage V2 is sufficiently high to automatically bring the diode 420 in a conduction state ($V2>V3_{MIN}+VTH2$). Preferably, if they determine over-heating conditions for the charging stage 3 on the base of the sensing signals D4, the control means 5 provide control signals C2 to the charging stage 3 to switch off said charging stage for a given period of time.

Preferably, if they determine over-heating or over-cooling conditions for the batteries 60 on the base of the sensing signals D5, the control means 5:

- provide control signals C2 to the charging stage 3 to switch off said charging stage for a given period of time;
- provide control signals C3 to the disconnection stage 6 to disconnect the batteries 60 from the electric loads 70.

As an example, over-heating or over-cooling conditions of the batteries 60 may occur when the temperature of the batteries is out of a given range including a normal operative temperature, e.g. 30°C.

Preferably, if they determine over-loading conditions for one or more first loads on the base of the sensing signals D1 and/or on the base of the status signals M, the control means 5:

- provide control signals C4 to disconnect one or more second electric loads, preferably according to the available load priority data;
- provide control signals C2 to switch-off the charging stage 2, if the control means 5 determine that the electric power provided by the UPS device is not sufficient for said first electric loads, after having disconnected said second electric loads;
- provide control signals C1 to adjust the output voltage V1 so that it is lower than the output voltage V2 provided by the batteries 60 for a given period of time, if the control means 5 determine that the electric power provided by the UPS device is not sufficient for said first electric loads, after having switched off said charging stage. In this case, the feeding of the electric load 70 is ensured by the batteries 60 only. In fact, the diode circuit 41 prevents the flow of a feeding current IF1 from the conversion stage 2 to the electric loads 70 whereas the diode circuit 42 allows the flow of a feeding current IF2 from the batteries 60 to the electric loads 70.

Preferably, if they determine fault conditions for one or more loads on the base of the status signals M, the control means 5 provide control signals C4 to electrically disconnect said loads from the UPS device 1.

Preferably, in order to carry out a consumption test on the electric loads 70, the control means 5 provide control signals C4 to electrically connect or disconnect said loads with or from the UPS device 1, according to predetermined test sequences, e.g. on the base of the load priority data.

The control means 5 may then determine the consumption of the electric loads 70 on the base of the status signals M received from said loads.

Preferably, in order to carry out an efficiency test of the batteries 60, the control means 5 provide control signals C1 to adjust the output voltage V1 so that it is lower than the output voltage V2 provided by the batteries 60 (the electric loads 70 are therefore fed by the batteries 60 only) for a given period of time.

The control means 5 may then determine the operative status of the batteries 60 on the base of the sensing signals D5 received from the sensing means S5.

It is observed that, in case of fault of the batteries 60, the feeding of the electric loads 70 is ensured by the conversion stage 2. The diode circuit 41, in fact, allows the flow of a feeding current IF1 from the conversion stage 2 to the electric loads 70, even if the output voltage V1 was set lower than the output voltage V2, as no currents flow along the second diode circuit 42 anymore and the output voltage V1 is sufficiently high ($V1 > V3_{MIN} + VTH1$) to automatically bring the diode 410 in a conduction state.

Preferably, the control means 5 are adapted to communicate with remote devices (e.g. a remote computerised unit) to exchange data and/or control signals R.

Preferably, the control means 5 comprises an interface 51, which is operatively connectable (in a wired or wireless manner) with a communication module (e.g. including an USP port or including a slot for insertion of a SD card) to receive one or more configuration parameters R (e.g. charging values of the batteries 60, temperature threshold values, voltage threshold values, current threshold values, and the like) from said communication module.

The UPS device 1, according to the present invention, provides remarkable advantages with respect to the solutions of the state of the art.

The UPS device 1 provides reliable and improved performances in managing the electric loads 70 electrically coupled thereof.

The UPS device 1 allows managing the feeding of the electric loads 70 in a very flexible and versatile manner both in normal and in emergency conditions.

In particular, the UPS device is capable of highly efficiently managing the feeding of the electric loads 70 when of overload conditions or fault conditions are present.

The UPS device 1 allows performing advanced diagnostics procedures on the batteries 60 and on the electric loads 70.

The UPS device 1 provides relevant advantages in terms of power consumption and size reduction.

In fact, it may advantageously employ a single conversion stage 2, which, thanks to the smart functionalities that can be easily carried out by the control means 5, may be designed to provide the average electric power request by electric loads 70 (and not the peak electric power request as it occurs in traditional UPS devices).

The UPS device 1 is particularly suitable for use in outdoor MV electric installations (e.g. in outdoor MV switching apparatuses).

The UPS device 1 is easy and cheap to manufacture at industrial levels with respect to the solutions currently available in the state of the art.

**Claims**

1. An UPS device (1) for MV electric installations, said UPS device being electrically coupleable with a power supply (50), with one or more batteries (60) and with one or more electric loads (70), comprising:

    - a conversion stage (2), which is electrically coupleable with said power supply (50), said conversion stage (2) being adapted to receive electric power from said power supply (50) and provide an adjustable first output voltage (V1);
    - a charging stage (3), which is electrically coupled with said conversion stage (2) and is electrically coupleable with said batteries (60), said charging stage (3) being adapted to receive electric power from said conversion stage (2) and provide a charging current to said batteries (60);
    - a switching stage (4), which has a first input terminal (T1) electrically coupled with said conversion stage, (2) a second input terminal (T2) electrically coupleable with said batteries (60) and a third output terminal (T3) electrically coupled to said electric loads, said switching stage (4) comprising:

        - a first diode circuit (41), which is electrically connected with said first input terminal (T1) and said third output terminal (T3), said first diode circuit (41) being configured so that it allows the flow of a first feeding current (IF1) from said conversion stage (2) to said electric loads (70), when the voltage (V1) at said first input terminal (T1) is higher than a voltage (V3) at said third output terminal (T3);
- a second diode circuit (42), which is electrically connected with said second input terminal (T2) and said third output terminal (T3), said second diode circuit (42) being configured so that it allows the flow of a second feeding current (IF2) from said batteries (60) to said electric loads (70), when the voltage (V2) at said second input terminal (T2) is higher than the voltage (V3) at said third output terminal (T3);
- control means (5) adapted to control the charging of said batteries (60) and the feeding of said electric loads (70), said control means (5) being adapted to manage the feeding of said electric loads (70) by adjusting the first output voltage (V1) at said first input terminal (T1), which is provided by said conversion stage (2), as a function of the second output voltage (V2) at said first input terminal (T2), which is provided by said batteries (60);

characterized in that it comprises a disconnection stage (6), which is electrically coupleable with said batteries (60) and said electric loads (70), said disconnection stage (6) being adapted to electrically connect/disconnect said batteries (60) with/from said electric loads (70), wherein said control means (5) are adapted to receive fifth sensing signals (D5) indicative of a temperature of said batteries (60); wherein said control means (5) are adapted to provide control signals (C2) to said charging stage (3) to switch off said charging stage (3) for a given period of time and control signals (C3) to said disconnection stage (6) to disconnect said batteries (60) from said electric loads (70) to switch off said disconnection stage (6) for a given period of time, if said control means (5) determine over-heating or over-cooling of said batteries (60) on the base of said fifth sensing signals (D5).

2. An UPS device, according to claim 1, **characterised in that** it comprises:

- first sensing means (S1) adapted to provide first sensing signals (D1) indicative of the first output voltage (V1) and a first output current (I1) provided by said conversion stage;
- second sensing means (S2) adapted to provide second sensing signals (D2) indicative of a second output voltage (V2) and a second output current (I2) provided by said batteries;

said control means being adapted to receive said first and second sensing signals from said first and second sensing means and to manage the charging of said batteries and the feeding of said electric loads on the base of the information provided by said first and second sensing signals.

3. An UPS device, according to one or more of the previous claims, **characterised in that** it comprises third sensing means (S3) adapted to provide third sensing signals (D3) indicative of a temperature of said conversion stage, said control means being adapted to receive said third sensing signals from said third sensing means and to manage the charging of said batteries and the feeding of said electric loads on the base of the information provided by said third sensing signals.

4. An UPS device, according to one or more of the previous claims, **characterised in that** it comprises fourth sensing means (S4) adapted to provide fourth sensing signals (D4) indicative of a temperature of said charging stage, said control means being adapted to receive said fourth sensing signals from said fourth sensing means and to manage the charging of said batteries and the feeding of said electric loads on the base of the information provided by said fourth sensing signals.

5. An UPS device, according to one or more of the previous claims, **characterised in that** said control means are adapted to receive status signals (M) indicative of the operative status of said electric loads and to manage the charging of said batteries and the feeding of said electric loads on the base of the information provided by said monitoring signals.

6. An UPS device, according to claim 5, **characterised in that** said control means are adapted to control the electrical connection/disconnection of said electric loads with/from said UPS device on the base of the information provided by said status signals.

7. An UPS device, according to one or more of the previous claims, **characterised in that** said control means are adapted to control an electrical connection/disconnection of said electric loads with/from said UPS device on the base of load priority data.

8. A MV electric installation **characterised in that** it comprises an UPS device, according to one or more of the previous claims.

9. A MV electric installation according to claim 8 **char-**

**acterised in that** it is an outdoor MV electric installation.

**Patentansprüche**

1. USV-Vorrichtung (1) für MS-Elektroinstallationen, wobei die USV-Vorrichtung elektrisch mit einer Stromversorgung (50) koppelbar ist, mit einer oder mehreren Batterien (60) und mit einer oder mehreren elektrischen Lasten (70), umfassend:

   - eine Wandelstufe (2), die elektrisch mit der Stromversorgung (50) koppelbar ist, wobei die Wandelstufe (2) ausgelegt ist, elektrische Leistung von der Stromversorgung (50) zu empfangen und eine einstellbare erste Ausgangsspannung (V1) bereitzustellen;
   - eine Ladestufe (3), die elektrisch mit der Wandelstufe (2) gekoppelt ist und elektrisch mit den Batterien (60) koppelbar ist, wobei die Ladestufe (3) ausgelegt ist, elektrische Leistung von der Wandelstufe (2) zu empfangen und einen Ladestrom an die Batterien (60) bereitzustellen;
   - eine Schaltstufe (4), die einen ersten Eingangsanschluss (T1) aufweist, der elektrisch mit der Wandelstufe (2) gekoppelt ist, einen zweiten Eingangsanschluss (T2), der elektrisch mit den Batterien (60) koppelbar ist, und einen dritten Ausgangsanschluss (T3), der elektrisch mit den elektrischen Lasten gekoppelt ist, wobei die Schaltstufe (4) umfasst:
   - eine erste Diodenschaltung (41), die elektrisch mit dem ersten Eingangsanschluss (T1) und dem dritten Ausgangsanschluss (T3) verbunden ist, wobei die erste Diodenschaltung (41) derart konfiguriert ist, dass sie den Fluss eines ersten Zuführstroms (IF1) von der Wandelstufe (2) zu den elektrischen Lasten (70) erlaubt, wenn die Spannung (V1) an dem ersten Eingangsanschluss (T1) höher ist als eine Spannung (V3) an dem dritten Ausgangsanschluss (T3);
   - eine zweite Diodenschaltung (42), die elektrisch mit dem zweiten Eingangsanschluss (T2) und dem dritten Ausgangsanschluss (T3) verbunden ist, wobei die zweite Diodenschaltung (42) derart konfiguriert ist, dass sie den Fluss eines zweiten Zuführstroms (IF2) von den Batterien (60) zu den elektrischen Lasten (70) erlaubt, wenn die Spannung (V2) an dem zweiten Eingangsanschluss (T2) höher ist als die Spannung (V3) an dem dritten Ausgangsanschluss (T3);
   - Steuermittel (5), die ausgelegt sind, das Laden der Batterien (60) und das Zuführen der elektrischen Lasten (70) zu steuern, wobei die Steuermittel (5) dafür ausgelegt sind, das Zuführen der elektrischen Lasten (70) durch Einstellen der ersten Ausgangsspannung (V1) an dem ersten Eingangsanschluss (T1), die von der Wandelstufe (2) bereitgestellt wird, als eine Funktion der zweiten Ausgangsspannung (V2) an dem ersten Eingangsanschluss (T2), der von den Batterien (60) bereitgestellt wird, zu verwalten;

   **dadurch gekennzeichnet, dass** es eine Trennstufe (6) umfasst, die elektrisch mit den Batterien (60) und den elektrischen Lasten (70) koppelbar ist, wobei die Trennstufe (6) dafür ausgelegt ist, die Batterien (60) elektrisch mit/von den elektrischen Lasten (70) zu verbinden/zu trennen,
   wobei die Steuermittel (5) ausgelegt sind, fünfte Sensorsignale (D5) zu empfangen, die für Temperatur der Batterien (60) indikativ sind;
   wobei die Steuermittel (5) ausgelegt sind, Steuersignale (C2) an das Laden (3) bereitzustellen, um die Ladestufe (3) für einen gegebenen Zeitraum auszuschalten, und Steuersignale (C3) an die Trennstufe (6), um die Batterien (60) von den elektrischen Lasten (70) zu trennen, um die Trennstufe (6) für einen gegebenen Zeitraum auszuschalten, wenn die Steuermittel (5) Überhitzen oder Überkühlen der Batterien (60) basierend auf den fünften Sensorsignalen (D5) bestimmen.

2. USV-Vorrichtung nach Anspruch 1, **dadurch gekennzeichnet, dass** sie umfasst:

   - erste Sensormittel (S1), die ausgelegt sind, erste Sensorsignale (D1) bereitzustellen, die indikativ für die erste Ausgangsspannung (V1) und einen ersten Ausgangsstrom (I1) sind, die von der Wandelstufe bereitgestellt werden;
   - zweite Sensormittel (S2), die ausgelegt sind, zweite Sensorsignale (D2) bereitzustellen, die indikativ für eine zweite Ausgangsspannung (V2) und einen zweiten Ausgangsstrom (I2) sind, die von den Batterien bereitgestellt werden;

   wobei die Steuermittel ausgelegt sind, die ersten und zweiten Sensorsignale von den ersten und zweiten Sensormitteln zu empfangen und das Laden der Batterien und das Zuführen der elektrischen Lasten basierend auf den Informationen, die von den ersten und zweiten Sensorsignalen bereitgestellt werden, zu verwalten.

3. USV-Vorrichtung gemäß einem oder mehreren der vorstehenden Ansprüchen, **dadurch gekennzeichnet, dass** sie dritte Sensormittel (S3) umfasst, die ausgelegt sind, dritte Sensorsignale (D3) bereitzustellen, die indikativ für eine Temperatur der Wandelstufe sind, wobei die Steuermittel ausgelegt sind, die dritten Sensorsignale von den dritten Sensormitteln zu empfangen, und das Laden der Batterien und das Zuführen der elektrischen Lasten basierend auf den Informationen zu verwalten, die von den dritten Sensorsignalen bereitgestellt werden.

4. USV-Vorrichtung nach einem oder mehreren der vorstehenden Ansprüche, **dadurch gekennzeichnet, dass** sie vierte Sensormittel (S4) umfasst, die ausgelegt sind, vierte Sensorsignale (D4) bereitzustellen, die indikativ für eine Temperatur der Ladestufe sind, wobei die Steuermittel ausgelegt sind, die vierten Sensorsignale von den vierten Sensormitteln zu empfangen und das Laden der Batterien und das Zuführen der elektrischen Lasten basierend auf den Informationen zu verwalten, die von den vierten Sensorsignalen bereitgestellt werden.

5. USV-Vorrichtung nach einem oder mehreren der vorstehenden Ansprüche, **dadurch gekennzeichnet, dass** die Steuermittel ausgelegt sind, Zustandssignale (M) zu empfangen, die indikativ für den Betriebszustand der elektrischen Lasten sind, und das Laden der Batterien und das Zuführen der elektrischen Lasten basierend auf den Informationen zu verwalten, die von den Überwachungssignalen bereitgestellt werden, zu verwalten.

6. USV-Vorrichtung nach Anspruch 5, **dadurch gekennzeichnet, dass** die Steuermittel ausgelegt sind, die elektrische Verbindung/Trennung der elektrischen Lasten mit/von der USV-Vorrichtung basierend auf den Informationen zu steuern, die von den Zustandssignalen bereitgestellt werden.

7. USV-Vorrichtung nach einem oder mehreren der vorstehenden Ansprüche, **dadurch gekennzeichnet, dass** die Steuermittel ausgelegt sind, eine elektrische Verbindung/Trennung der elektrischen Lasten mit/von der USV-Vorrichtung basierend auf Lastprioritätsdaten zu steuern.

8. MS-Elektroinstallation, **dadurch gekennzeichnet, dass** sie eine USV-Vorrichtung nach einem oder mehreren der vorstehenden Ansprüche umfasst.

9. MS-Elektroinstallation nach Anspruch 8, **dadurch gekennzeichnet, dass** sie eine MS-Elektroinstallation im Außenbereich ist.

**Revendications**

1. Dispositif ASI (1) pour des installations électriques MT, ledit dispositif ASI pouvant être couplé électriquement avec une alimentation en énergie (50), avec une ou plusieurs batteries (60) et avec une ou plusieurs charges électriques (70), comprenant :

- un étage de conversion (2), qui peut être couplé électriquement avec ladite alimentation en énergie (50), ledit étage de conversion (2) étant adapté pour recevoir une énergie électrique en provenance de ladite alimentation en énergie (50) et fournir une première tension en sortie ajustable (V1) ;
- un étage de recharge (3), qui est couplé électriquement avec ledit étage de conversion (2) et peut être couplé électriquement avec lesdites batteries (60), ledit étage de recharge (3) étant adapté pour recevoir une énergie électrique en provenance dudit étage de conversion (2) et fournir un courant de recharge auxdites batteries (60) ;
- un étage de commutation (4), qui a une première borne en entrée (T1) couplée électriquement avec ledit étage de conversion (2), une deuxième borne en entrée (T2) pouvant être couplée électriquement avec lesdites batteries (60) et une troisième borne en sortie (T3) couplée électriquement avec lesdites charges électriques, ledit étage de commutation (4) comprenant :
- un premier circuit à diode (41), qui est connecté électriquement avec ladite première borne en entrée (T1) et ladite troisième borne en sortie (T3), ledit premier circuit à diode (41) étant configuré de sorte qu'il permet la circulation d'un premier courant d'alimentation (IF1) depuis ledit étage de conversion (2) vers lesdites charges électriques (70), lorsque la tension (V1) au niveau de ladite première borne en sortie (T1) est plus élevée qu'une tension (V3) au niveau de ladite troisième borne en sortie (T3) ;
- un second circuit à diode (42), qui est connecté électriquement avec ladite deuxième borne en entrée (T2) et ladite troisième borne en sortie (T3), ledit second circuit à diode (42) étant configuré de sorte qu'il permet la circulation d'un second courant d'alimentation (IF2) depuis lesdites batteries (60) vers lesdites charges électriques (70), lorsque la tension (V2) au niveau de ladite deuxième borne en entrée (T2) est plus élevée que la tension (V3) au niveau de ladite troisième borne en sortie (T3) ;
- des moyens de commande (5) adaptés pour commander la recharge desdites batteries (60) et l'alimentation desdites charges électriques (70), lesdits moyens de commande (5) étant adaptés pour gérer l'alimentation desdites charges électriques (70) en ajustant la première tension en sortie (V1) au niveau de la première borne en entrée (T1), qui est fournie par ledit étage de conversion (2), en fonction de la seconde tension en sortie (V2) au niveau de ladite première borne en entrée (T2), qui est fournie par lesdites batteries (60) ;

**caractérisé en ce qu'**il comprend un étage de déconnexion (6), qui peut être couplé électriquement avec lesdites batteries (60) et lesdites charges électriques (70), ledit étage de déconnexion (6) étant adapté pour connecter électriquement lesdites batteries (60) avec lesdites charges électriques (70) et les en déconnecter,

dans lequel lesdits moyens de commande (5) sont adaptés pour recevoir des cinquièmes signaux de détection (D5) indiquant une température desdites batteries (60) ;

dans lequel lesdits moyens de commande (5) sont adaptés pour fournir des signaux de commande (C2) audit étage de recharge (3) pour désactiver ledit rechargement (3) pendant un laps de temps donné et des signaux de commande (C3) audit étage de déconnexion (6) pour déconnecter lesdites batteries (60) desdites charges électriques (70) pour désactiver ledit étage de déconnexion (6) pendant un laps de temps donné, si lesdits moyens de commande (5) déterminent une surchauffe ou un sur-refroidissement desdites batteries (60) sur la base desdits cinquièmes signaux de détection (D5).

2. Dispositif ASI, selon la revendication 1, **caractérisé en ce qu'**il comprend :

    - des premiers moyens de détection (S1) adaptés pour fournir des premiers signaux de détection (D1) indiquant une première tension en sortie (V1) et un premier courant en sortie (I1) fournis par ledit étage de conversion ;
    - des seconds moyens de détection (S2) adaptés pour fournir des deuxièmes signaux de détection (D2) indiquant une seconde tension en sortie (V2) et un second courant en sortie (I2) fournis par lesdites batteries ;

lesdits moyens de commande étant adaptés pour recevoir lesdits premiers et deuxièmes signaux de détection en provenance desdits premiers et seconds moyens de détection et pour gérer la recharge desdites batteries et l'alimentation desdites charges électriques sur la base des informations fournies par lesdits premiers et deuxièmes signaux de détection.

3. Dispositif ASI, selon une ou plusieurs des revendications précédentes, **caractérisé en ce qu'**il comprend des troisièmes moyens de détection (S3) adaptés pour fournir des troisièmes signaux de détection (D3) indiquant une température dudit étage de conversion, lesdits moyens de commande étant adaptés pour recevoir lesdits troisièmes signaux de détection en provenance desdits troisièmes moyens de détection et pour gérer la recharge desdites batteries et l'alimentation desdites charges électriques sur la base des informations fournies par lesdits troisièmes signaux de détection.

4. Dispositif ASI, selon une ou plusieurs des revendications précédentes, **caractérisé en ce qu'**il comprend des quatrièmes moyens de détection (S4) adaptés pour fournir des quatrièmes signaux de détection (D4) indiquant une température dudit étage de recharge, lesdits moyens de commande étant adaptés pour recevoir lesdits quatrièmes signaux de détection en provenance desdits quatrièmes moyens de détection et pour gérer la recharge desdites batteries et l'alimentation desdites charges électriques sur la base des informations fournies par lesdits quatrièmes signaux de détection.

5. Dispositif ASI, selon une ou plusieurs des revendications précédentes, **caractérisé en ce que** lesdits moyens de commande sont adaptés pour recevoir des signaux de statut (M) indiquant le statut opérationnel desdites charges électriques et pour gérer la recharge desdites batteries et l'alimentation desdites charges électriques sur la base des informations fournies par lesdits signaux de surveillance.

6. Dispositif ASI, selon la revendication 5, **caractérisé en ce que** lesdits moyens de commande sont adaptés pour commander la connexion électrique desdites charges électriques avec ledit dispositif ASI ou leur déconnexion de celui-ci sur la base des informations fournies par lesdits signaux de statut.

7. Dispositif ASI, selon une ou plusieurs des revendications précédentes, **caractérisé en ce que** lesdits moyens de commande sont adaptés pour commander une connexion électrique desdites charges électriques avec ledit dispositif ASI ou leur déconnexion de celui-ci sur la base de données de priorité de charge.

8. Installation électrique MT **caractérisée en ce qu'**elle comprend un dispositif ASI, selon une ou plusieurs des revendications précédentes.

9. Installation électrique MT selon la revendication 8, **caractérisée en ce qu'**il s'agit d'une installation électrique MT en extérieur.

FIG. 1

FIG. 2

**EP 3 046 215 B1**

REFERENCES CITED IN THE DESCRIPTION

**Patent documents cited in the description**

- US 20050068002 A1

- US 7816812 B2